# EUROPÄISCHE PATENTSCHRIFT

(11) **EP 3 310 183 B1**
(45) Veröffentlichungstag und Bekanntmachung des Hinweises auf die Patenterteilung: **07.06.2023**
(21) Anmeldenummer: 16730837.8
(22) Anmeldetag: 20.06.2016
(51) Int. Cl.: A23G 3/34, A23G 3/36, A23G 3/50, A23G 3/54, A23G 3/56

(54) **ALKOHOLHALTIGE BONBONWARE**
ALCOHOLIC CONFECTIONARY
CONFISERIE ALCOOLISE

(30) Priorität: 18.06.2015 EP 15172734
(43) Veröffentlichungstag der Anmeldung: 25.04.2018
(73) Patentinhaber: Puca, Giuseppe, 47798 Krefeld (DE)
(72) Erfinder: Puca, Giuseppe, 47798 Krefeld (DE)
(74) Vertreter: Gille Hrabal Partnerschaftsgesellschaft mbB Patentanwälte
(86) Internationale Anmeldenummer: PCT/EP2016/064138
(87) Internationale Veröffentlichungsnummer: WO 2016/203036

(56) Entgegenhaltungen:
- EP-A1- 0 398 279
- EP-A1- 0 965 274
- EP-A2- 0 064 155
- WO-A1-2004/010791
- WO-A1-2011/027103
- WO-A1-2011/104564
- WO-A1-2015/101970
- DE-A1-102012 209 159
- DE-U1- 29 908 058
- GB-A- 2 355 641
- GB-A- 2 463 658
- US-A1- 2003 215 548
- US-A1- 2010 119 660
- US-A1- 2013 337 139
- GOEPEL G: "Alkoholhaltige Pralinen und ihre Verfahrenstechniken [Alcohol-containing chocolates and their manufacture]", SUESSWAREN, RHENANIA, HAMBURG, DE, Bd. 24, Nr. 10, 1. Januar 1980 (1980-01-01), Seiten 30,33-36, XP008178186, ISSN: 0721-0825

## Beschreibung

Die vorliegende Erfindung betrifft eine Bonbonware in Form von Hart- oder Weichkaramellen aus einem neuen Bonbonwarenmaterial, umfassend zumindest zwei Komponenten (a) und (b), wie in den Patentansprüchen definiert. Des Weiteren betrifft die vorliegende Erfindung ein Verfahren zur Herstellung solcher Bonbonwaren.

Bonbonwaren, wie Bonbons oder Lutscher, die flüssige Bestandteile, wie z.B. auch Alkohol, enthalten, sind grundsätzlich bereits bekannt. Dabei werden bisher Bonbonwaren mit flüssigen bzw. alkoholischen Bestandteile hergestellt, indem eine Bonbonware mit einem Hohlraum bzw. einem Kern-Hülle-Aufbau hergestellt wird, worin die flüssigen bzw. alkoholischen Anteile als Füllung in dem Hohlraum bzw. dem Kern, der von einem Hüllmaterial umgeben ist, vorliegen, wodurch der flüssige Alkohol in der Bonbonware in einer Art Verkapselung vorliegt.

Süßwaren, wie z.B. Kaugummis oder Bonbons, mit einem derartigen Kern-Hülle-Aufbau, die Alkohol in einem Hohlraum als flüssigen oder weichen Kern umhüllt von einer festen Hülle aufweisen, sind beispielsweise bekannt aus der WO 2008/105908 A, US 2009/0074911 A, EP 2 305 742 A, AU 2010/210005 A, US 2009/0150231 A, WO 98/47483 A und der US 7,641,926 B.

Weitere derartige alkoholhaltige Süßwaren mit Kern-Hülle-Struktur sind beispielsweise bekannt aus der DE 10 2012 209159 betreffend einen alkoholgefüllten Lutscher; aus der GB 2 355 641 betreffend Süßwaren, die eine alkoholische Füllung umhüllt von einer 2-schichtigen süßen Hülle aufweisen; aus der DE 299 08 058 U1 betreffend Bonbons mit einer alkoholischen Füllung; aus der FR 587 969 betreffend gefüllte Bonbonwaren mit einem zuckerhaltigen Körper der mit einer alkoholischen Flüssigkeit gefüllt ist; aus der NL 7 412 492 betreffend Bonbonwaren mit flüssiger Alkoholfüllung; oder aus der GB 2 196 828 betreffend eine Süßware mit einem äußeren Gelatinekörper auf Zuckerbasis der eine Aushöhlung aufweist, worin ein zweiter weicher Formkörper eingelagert ist, welcher z.B. eine alkoholische Lösung einschließt.

Auch Konfekt, Pralinen, Eis oder Schokoladenformkörper mit flüssiger Alkoholfüllung in Form eines Kern-Hülle-Aufbaus, worin die alkoholische Füllung in einem Hohlraum in der Süßware eingeschlossen ist, sind bekannt, z.B. aus der US 2010/119660 betreffend Schokoladenformkörper, die eine Aroma-Substanz, wie z.B. Wein, in einer Umhüllung verkapselt enthalten; aus der GB 2 463 658 betreffend Konfekt auf Basis fetthaltiger Bestandteile, wie z.B. aus Schokolade, mit alkoholischer Füllung in Form flüssigkeitsgefüllter Hohlräume; aus der EP 0 064 155 betreffend gefülltes Konfekt, worin zwei Schalenhälften eine flüssige Füllung umschließen; aus der WO 2004/010791 betreffend gefrorene Süßwaren wie eine Eismasse, beispielsweise mit einem Schokoladenüberzug, worin Kapseln mit einer flüssigen Füllung eingearbeitet sind; aus der WO 2015/101970 betreffend Schokoladenmatrices in die Tröpfchen einer flüssigen Füllung eingearbeitet sind welche von einer Umhüllung verkapselt werden; aus der EP 0 398 279 betreffend zuckerfreie Krustenpralinen, worin ein Wasser-Alkoholgemisch mit Polyolen und Verdickungsmitteln zu einer Krustenpraline verarbeitet wird; oder aus Süsswaren, Bd. 24,10; 1980"Alkoholhaltige Pralinen und ihre Verfahrenstechniken" (Göpel G.). Auch US2013/337139 und US2003/215545 betreffen gefrorene Süßwaren bzw. Eismassen.

Desweiteren sind aus der WO 2011/104564 oder aus der EP 0965274 Süßwaren in Form von Extrusionsformkörpern bekannt, wobei diese Extrusionsformkörper Hohlräume aufweisen können die z.B. mit einer alkoholischen Flüssigkeit verfüllt werden können. Somit weisen auch die hier beschriebenen alkoholhaltigen Extrusionsformkörper die oben beschriebenen Hülle-Kern-Struktur mit einem flüssig verfüllten Hohlraum auf.

Nachteilig an solchen aus dem Stand der Technik bekannten Süßwaren ist, dass jeweils nur der innere Kern bzw. der Hohlraum die flüssigen Bestandteile wie z.B. den Alkohol, enthält. Beim Genuss derartiger Süßwaren muss der Konsument somit zunächst die Hüllstruktur durchdringen oder auflösen, bevor sich ihm das Geschmackserlebnis der im Kern befindlichen alkoholischen Bestandteile erschließt. Dabei tritt dann in der Regel die flüssige alkoholische Füllung sehr unmittelbar und in hoher Konzentration nur in einem sehr kurzen Zeitintervall des Verzehrs auf, so wird nämlich erst mit dem Auflösen, z.B. durch Lutschen oder Zerbeißen der Verkapselung oder Hüllstruktur die flüssige alkoholische Füllung mit einem Mal und nahezu vollständig freigesetzt und in der Regel direkt geschluckt. Ein andauerndes Geschmackserlebnis, welches den Genuss des Alkoholaromas über den gesamten Zeitraum des Bonbon- oder Lutscherverzehrs, sowie gegebenenfalls auch in deutlich gemäßigterer Geschmacksdosierung, ermöglicht, ist dadurch nicht erzielbar.

Es ist somit wünschenswert, eine Bonbonware zur Verfügung zu stellen, worin die flüssigen, insbesondere alkoholischen Bestandteile bereits im Hüll-, Mantel- bzw. Bonbonwarenmaterial selbst enthalten sind und dadurch im Wesentlichen homogen in der gesamten Bonbonware verteilt vorliegen kann, so dass sich beim Verzehr derartiger Bonbonwaren das Geschmackserlebnis des Alkoholaromas von Beginn des Verzehrs an und über den gesamten Verzehrszeitraum ergibt.

Die WO 2011/027103 offenbart Süßwaren mit poröser Struktur, wobei in die Poren eine Füllung eingebracht werden kann. Die Herstellung derartiger poröser Strukturen gelingt darin durch Aufschäumen der Süßwarenmaterialien und anschließendes Einfüllen der gewünschten Füllmassen in die Poren. Ein derartiges Verfahren ist technisch aufwändig und die Durchführbarkeit hängt von der grundsätzlichen Schäumbarkeit der zu verwendenden Süßwarenmaterialien ab und birgt desweiteren die Schwierigkeit, mechanisch ausreichend stabile Schäume herzustellen, die auch beim Befüllen mit dem gewünschten Füllmaterial eine stabile Porosität beibehalten.

Aus der WO 2001/28359 sind alkoholische Süßwaren in Form von Geleezuckerwaren bekannt, worin eine wässrig-alkoholische Zuckerlösung mit einer Agar-Zuckerlösung vermischt wird und aus dieser Mischung Liköre, Fruchtpasten und Fruchtgelees hergestellt werden, die mit Schokoladen überzogen werden.

Es ist daher die Aufgabe der vorliegenden Erfindung, die Nachteile des Stands der Technik zu beseitigen, und insbesondere eine neue Bonbonware bereitzustellen, welche die oben stehenden Nachteile nicht aufweist und die insbesondere auch durch ein neues, einfacheres Herstellverfahren erhalten werden kann. Diese Bonbonware sollte ein Bonbonwarenmaterial umfassen, worin der Alkohol im Wesentlichen in dem gesamten festen Bonbonwarenmaterial, also in dem festen Teil der Bonbonware, verteilt und beim Verzehr über nahezu die gesamte Verzehrszeit freisetzbar vorliegt, ohne dass sich der darin enthaltene Alkohol bereits bei der Herstellung und/oder Lagerung verflüchtigt.

Gelöst wird diese Aufgabe durch Verwendung eines neuen und speziell hergestellten Bonbonwarenmaterials, welches zur Bildung der erfindungsgemäßen Bonbonwaren verwendet werden kann, sowie durch das neue erfindungsgemäße Verfahren zur Herstellung solcher neuer Bonbonwaren.

Die zugrundeliegende Aufgabe der vorliegenden Erfindung wird durch die Merkmale des unabhängigen Anspruchs 1 gelöst. Bevorzugte Ausgestaltungen der Erfindung sind in den Unteransprüchen angegeben oder werden nachfolgend näher beschrieben.

Die Erfindung bezieht sich auf eine Bonbonware die in Form einer Hartkaramelle, eines Bonbons, eines Lutschers, einer Weichkaramelle oder eines Kaubonbons ausgebildet ist, umfassend zumindest zwei Komponenten (a) und (b), worin
(a) eine alkoholfreie Komponente ist, enthaltend mindestens einen Zucker, Zuckeraustauschstoff, zuckerähnlichen Stoff oder Mischungen davon, und
(b) eine Komponente ist, enthaltend eine Mischung aus Ethanol oder einer alkoholischen Flüssigkeit in einer Trägermatrix,
die zusammen eine Bonbonware mit einem insgesamt massiven Bonbonwarenmaterial bilden, worin der Alkohol oder die alkoholischen Flüssigkeiten in der Komponente (b) in einer Trägermatrix gebunden vorliegt und im Wesentlichen homogen in dem gesamten festen Bonbonwarenmaterial verteilt vorliegt.

Die Erfindung bezieht sich beispielsweise auch auf eine Bonbonware, umfassend zumindest zwei Komponenten (a) und (b), worin
(a) eine alkoholfreie Komponente ist, enthaltend mindestens einen Zucker, Zuckeraustauschstoff, zuckerähnlichen Stoff oder Mischungen davon, und
(b) eine Komponente ist, enthaltend eine Mischung aus Ethanol oder einer alkoholischen Flüssigkeit mit mindestens einem Zucker, Zuckeraustauschstoff, zuckerähnlichen Stoff oder Mischungen davon,
wobei die Komponenten (a) und (b) in der Bonbonware mindestens eine Grenzfläche zueinander aufweisen.

Die erfindungsgemäßen Bonbonwaren sind insbesondere dadurch gekennzeichnet, dass die Komponenten (a) und (b) jeweils fest sind und zusammen ein massives Bonbonwarenmaterial bilden. Wobei sich insbesondere die Komponente (b) dadurch auszeichnet, dass in einer geeigneten Trägermatrix, wie nachfolgend definiert, Alkohol im Wesentlichen homogen verteilt vorliegt und diese Komponente (b) so in der Komponente (a) eingebettet ist, dass ein insgesamt massives und festes Bonbonwarenmaterial mit im Wesentlichen homogener Verteilung des Alkohols vorliegt, aus dem beim Verzehr (Auflösen des Bonbonwarenmaterials) der Alkohol über die nahezu gesamte Verzehrszeit nach und nach freigesetzt wird. Dazu wird der Alkohol in flüssiger Form mit dem Material der Trägermatrix der Komponente (b) durch intensives Verrühren vermischt, so dass der Alkohol in der Trägermatrix im Wesentlichen homogen verteilt und gebunden vorliegt.

Der Begriff Bonbonware im Sinne der vorliegenden Erfindung umfasst im Allgemeinen Zuckerwaren aus der Gruppe der Karamellen, wie Hartkaramellen, insbesondere Bonbons, Lutscher und Drops, sowie Weichkaramellen, insbesondere Kaubonbons, wie z.B. in der Definition der BLL-Richtlinie für Zuckerwaren (BLL - Bund für Lebensmittelrecht und Lebemsmittelkunde e.V.; Richtlinie für Zuckerwaren, Mai 2012) dargestellt. Klarstellend sei angemerkt, dass der erfindungsgemäße Begriff "Bonbonware" nicht auf Zucker-haltige Bonbonwaren beschränkt ist, sondern auch solche umfasst, die zusätzlich, überwiegend oder ausschließlich Zuckeraustauschstoffe und/oder zuckerähnliche Stoffe wie nachfolgend definiert, enthalten. Insbesondere umfassen Bonbonwaren im Rahmen der vorliegenden Erfindung solche Süßwaren, die sich im Mund (z.B. beim Kauen oder Lutschen) auflösen, dabei ist von dem erfindungsgemäßen Begriff der Bonbonware kein Kaugummi umfasst. Ebenfalls sind von dem erfindungsgemäßen Begriff der Bonbonware Süßwaren auf Schokoladenbasis wie z.B. Pralinen, Konfekt, Schokoladenformkörper oder auch Eis und Geleezuckerwaren nicht umfasst. Bevorzugt sind die erfindungsgemäßen Bonbonwaren als Hartkaramellen ausgebildet, bevorzugter als Bonbon oder Lutscher, besonders bevorzugt in der Form eines Lutschers.

Gemäß der Definition nach "Süßwarentechnologie, Fachbereich Zuckerwaren 2013; ZDS-Solingen" sind Hartkaramellen Zuckerwaren, die durch Einkochen von Saccharose-Glukosesirup-Lösungen bis auf einen Restwassergehalt von 1-3% unter Zugabe verschiedenartiger Aromastoffe, Fruchtsäuren und/oder wertbestimmenden Zusätzen wie Milch, Honig, Malz o.a. hergestellt werden. Hartkaramellen sind hochkonzentrierte, amorph-glasartig erstarrte Schmelzen von Zuckerarten unterschiedlichen Molekulargewichtes, die ihre Form in flüssigem oder plastischem Zustand erhalten. Sie zeichnen sich durch ein glasartiges Gefüge mit splittrigem Bruch aus und haben aufgrund ihres sehr niedrigen Wasserdampfdruckes eine sehr niedrige Gleichgewichtsfeuchte (GF-Wert=<30%) und sind daher sehr hygroskopisch. Hartkaramellen sind unter optimalen Bedingungen sehr lange haltbar. Grundvoraussetzungen für die Haltbarkeit sind:
- niedriger Wassergehalt
- optimales Verhältnis von Saccharose zu Glukosesirup
- geringe Hygroskopizität
- Abwesenheit von Kristallkeimen.

Weichkaramellen oder Kaubonbons unterscheiden sich von Hartkaramellen im Prinzip nur in ihrer Konsistenz, gegebenenfalls enthalten Weichkaramellen zusätzlich bis zu 15 % Fett sowie Emulgatoren. Gemäß "Die Welt der Zuckerwaren", herausgegeben vom BDSI - Bundesverbands der Deutschen Süßwarenindustrie e. V., Fachsparte Zuckerwaren, (Dezember 1999) wird je nach Restwassergehalt zwischen Hartkaramellen (harte Bonbons oder Karamellen mit einem Restwassergehalt von ca. 3 %) und Weichkaramellen (weich und kaubare Bonbons oder Karamellen mit einem Restwassergehalt von ca. 10 %) unterschieden, wodurch sich eine unterschiedliche "Textur" ergibt, so dass Hartkaramellen eher Produkte zum Lutschen sind, Weichkaramellen hingegen eher Produkte zum Kauen sind.

Bei der Herstellung von sogenannten zuckerfreien Hartkaramellen (oder Weichkaramellen) werden die verwertbaren Kohlenhydrate (Zucker) durch Zuckeraustauschstoffe ersetzt. Dabei ist die länderspezifische Gesetzgebung zur Zulassung von Zuckeraustauschstoffen zu beachten. So müssen Produkte die mehr als 9,9% Zuckeralkohole als Zuckeraustauschstoffe enthalten in Europa mit einem Warnhinweis auf deren laxierende Wirkung versehen werden.

Der Begriff Formkörper im Sinne der vorliegenden Erfindung umfasst alle dreidimensionalen Körper, insbesondere geometrische Körper wie kugelförmige, quaderförmige, würfelförmige, pyramidenförmige, prismaförmige, zylinderförmige, deltaederförmige, kegelförmige, torusförmige, paraboloide und hyperboloide Körper aber auch nicht-geometrische Körper wie ovoidförmige oder fraktale Körper, die aus dem erfindungsgemäßen Bonbonwarenmaterial geformt werden.

Der Begriff Bonbonwarenmaterial im Sinne der vorliegenden Erfindung bezeichnet auch eine Vorstufe der erfindungsgemäßen Bonbonwaren, wobei das Bonbonwarenmaterial in fester, viskoser, modellierbarer, zähplastischer, streich- oder fließfähiger Form vorliegen kann und die mindestens zwei Komponenten (a) und (b) umfasst, die in dem Bonbonwarenmaterial mindestens eine Grenzfläche zueinander aufweisen können. Eine solche viskose, modellierbare, zähplastische, streich- oder fließfähige Vorstufe des Bonbonwarenmaterials kann durch Abkühlen und/oder Erstarren verfestigt und so in einen Formkörper aus dem erfindungsgemäßen Bonbonwarenmaterial unter Erhalt der erfindungsgemäßen Bonbonware überführt werden.

Erfindungsgemäß ist die Komponente (a) des den Bonbonwaren-Formkörper bildenden Bonbonwarenmaterials vorzugsweise beständig (inert) gegen Alkohol, alkoholische und alkoholhaltige Füllungen.

Die Komponente (a) der erfindungsgemäßen Bonbonwaren ist fest und frei von Alkohol und enthält mindestens einen Zucker, Zuckeraustauschstoff, zuckerähnlichen Stoff oder Mischungen davon.

Die Komponente (b) der erfindungsgemäßen Bonbonwaren ist ebenfalls fest und enthält eine Mischung aus Ethanol oder einer alkoholischen Flüssigkeit in einer geeigneten Trägermatrix. Geeignete Materialien der Trägermatrix der Komponente (b) umfassen Zucker, Zuckeraustauschstoffe, zuckerähnliche Stoffe, Verdickungs- und Bindemittel, Hydrokolloide, jeweils wie unten definiert, oder Mischungen davon. Die Komponente (b) wird bevorzugt durch Einmischen oder Einrühren bzw. Vermischen oder Verrühren des flüssigen Ethanols oder der alkoholhaltigen Flüssigkeit in das bzw. mit dem Material der Trägermatrix erhalten. Bevorzugt wird das Material der Trägermatrix ausgewählt aus einem festen oder pulverförmig vorliegenden Zucker, Zuckeraustauschstoff, zuckerähnlichen Stoff, Verdickungsmittel oder Mischungen davon. Pulverförmig bezeichnet dabei bevorzugt ein feines Schüttgut mit einer Teilchengröße bis zu etwa 1 mm und umfasst Pulver, Puder und Stäube sowie kristallines partikuläres Schüttgut.

Im Sinne der vorliegenden Erfindung bezeichnet "fest" im Zusammenhang mit den Komponenten (a), (b) bzw. mit den Bonbonwaren oder dem Bonbonwarenmaterial einen festen Aggregatzustand bei Raumtemperatur und bis zu der bevorzugten Verarbeitungstemperatur. Insbesondere sind die erfindungsgemäßen Komponenten (a), (b) bzw. die Bonbonwaren oder das Bonbonwarenmaterial bei Raumtemperatur (20 °C ±5 °C) fest (insbesondere nicht fließfähig). Fest bezeichnet darin auch bei Raumtemperatur oder bis zu der bevorzugten Verarbeitungstemperatur formstabile, elastische Zustände, wie sie Weichkaramellen und Kaubonbons aufweisen. Beispielsweise kann fest im Zusammenhang mit den erfindungsgemäßen Bonbonwaren in Form von Hart- und Weichkaramellen einen Zustand mit einem Elastizitätsmodul > 300 Pa, bevorzugt > 400 Pa bezeichnen.

Der Begriff Zucker (Saccharide) umfasst im Sinne der vorliegenden Erfindung süß schmeckende wasserlösliche Mono-, Di- und Oligosaccharide wie insbesondere Glukose, Fruktose, Dextrose, Galaktose, Laktose, Saccharose und Maltose.

Zuckeraustauschstoffe im Sinne der vorliegenden Erfindungen umfassen gemäß der Definition nach "Süßwarentechnologie, Fachbereich Zuckerwaren 2013; ZDS-Solingen" Polyole, auch Zuckeralkohole oder Polyalkohole genannt, wobei es sich um Verbindungen handelt, die süß schmecken, aber nicht die für Zucker (Saccharide) typischen Reaktionen zeigen. Man gewinnt sie aus Mono- und Disacchariden, sowie aus den Stärkeverzuckerungsprodukten durch Reduktion der Carboxylgruppe. Beispiele für Zuckeraustauschstoffe umfassen Sorbit (Sorbitol), Xylit (Xylitol), Maltit (Maltitol), Mannit (Mannitol), Isomalt, Erythrit, Lactit (Lactitol).

Der Begriff Isomalt im Sinne der vorliegenden Erfindung umfasst einen Zuckeraustauschstoff. Isomalt wird durch katalytische Hydrierung von Isomaltose (Palatinose) gewonnen und ist eine Mischung aus α-d-Glucopyranosido-1,6-sorbit und α-d-Glucopyranosido-1,6-mannit. Isomalt wird kommerziell auch unter der Markenbezeichnung Palatinit^{®} vertrieben.

Sorbit oder Sorbitol ist ein Zuckeraustauschstoff aus der Gruppe der Zuckeralkohole und ist die reduzierte Polyolform der Hexosen Glukose, Fruktose und Sorbose und kann aus diesen durch katalytische oder elektrochemische Hydrierung hergestellt werden.

Zuckerähnliche Stoffe im Sinne der vorliegenden Erfindung umfassen zuckerähnliche Abbauprodukte der Stärke, egal ob es sich um Weizen-, Mais- oder Reisstärke oder auch Tapiokastärke handelt, die eine Kettenlänge der Dextrose-Moleküle, entsprechend der Oligosaccharid-Kettenlänge oder höher besitzen. Beispiele umfassen Dextrine, Maltodextrine und Polydextrine, wie z.B Maltodextrine auf Basis von Tapiokastärke. Zuckerähnliche Stoffe im Sinne der vorliegenden Erfindung umfassen außerdem Polydextrose sowie Zuckerester.

Der Begriff Polydextrose im Sinne der vorliegenden Erfindung bezeichnet eine langkettige zuckerähnliche synthetische Verbindung aus Glukose, Sorbit und Zitronensäure und ist in der EU als Lebensmittelzusatzstoff unter der Bezeichnung E 1200 zugelassen.

Der Begriff Zuckerester bezeichnet Ester von anorganischen oder organischen Säuren mit Sacchariden, die zur Verwendung in Lebensmitteln vorzugsweise aus Saccharose (einfacher Haushaltszucker) und bestimmten Fettsäuren (u. a. Stearin-, Palmitinsäure) hergestellt werden.

Bevorzugt sind die Zucker, Zuckeraustauschstoffe und zuckerähnlichen Stoffe der Komponente (a) und/oder der Trägermatrix der Komponente (b) ausgewählt aus der Gruppe, bestehend aus Glukose, Fruktose, Dextrose, Galaktose, Laktose, Saccharose, Maltose, Sorbit, Xylit, Maltit, Mannit, Isomalt, Erythrit, Lactit, Dextrinen, Maltodextrinen, Polydextrinen, Polydextrose und Mischungen davon. Bevorzugt sind Glukose, Isomalt, Maltit, Sorbit, Dextrin und Polydextrose sowie Maltodextrin (insbesondere auf Basis von Tapiokastärke).

Die Komponente (a) der erfindungsgemäßen Bonbonwaren enthält dabei bevorzugt Isomalt oder Sorbit oder Mischungen davon. Außerdem kann in einer besonders bevorzugten Ausführungsform die Komponente (a) außerdem Polydextrose und/ oder Zuckerester enthalten.

Die Materialien der Trägermatrix der Komponente (b) der erfindungsgemäßen Bonbonwaren sind dabei bevorzugt Zucker, Zuckeraustauschstoffe oder zuckerähnliche Stoffe die ausgewählt sind aus der Gruppe umfassend Maltitol, Sorbitol, Isomalt, Dextrin, Maltodextrin (insbesondere auf Basis von Tapiokastärke), Polydextrose und Mischungen davon; Verdickungs- und Bindemittel die ausgewählt sind aus der Gruppe wie unten definiert, bevorzugt aus der Gruppe umfassend Cellulosen, wie mikrokristalline Cellulose, Methyl-, Ethyl-, Hydroxypropyl-, Hydroxypropylmethyl-, Methylethyl-, Carboxymethyl, Natriumcarboxymethylcellulose und Celluloseether; Verdickungsmittel aus der Gruppe der Hydrokolloide wie unten definiert, bevorzugt aus der Gruppe umfassend Xanthan, Johannisbrotkernmehl; oder jeweils Mischungen davon. Bevorzugt enthält die Trägermatrix der Komponente (b) mindestens einen Bestandteil aus der Gruppe der Zucker, Zuckeraustauschstoffe und zuckerähnlichen Stoffe wie hierin definiert, was sich vorteilhaft auf die Geschmacksgebung der Bonbonware auswirkt.

Die Zucker, Zuckeraustauschstoffe und/oder zuckerähnlichen Stoffe können grundsätzlich in granulärer, kristalliner, pulverisierter, geschmolzener bzw. verflüssigter Form oder Mischungen davon eingesetzt werden. Erfindungsgemäß werden insbesondere zur Herstellung der Komponente (b) die Zucker, Zuckeraustauschstoffe und/oder zuckerähnlichen Stoffe in granulärer, kristalliner Form oder in Form eines Pulvers (wie vorstehend definiert) eingesetzt.

Alkohol umfasst im Sinne der vorliegenden Erfindung Ethanol sowie auf Alkohol basierende Flüssigkeiten und alle alkoholischen Produkte (z.B. alkoholische Getränke oder Getränkezubereitungen) und alkoholischen Grundstoffe, die einen Mindestanteil an Alkohol von 10 Vol.-% oder bis zu 30 Vol.-% und einen Maximalanteil in Höhe von reinem Ethanol enthalten. Insbesondere sind verzehrfähige alkoholhaltige Flüssigkeiten gemeint.

Eine Mischung aus mindestens einem Material der Trägermatrix wie vorstehend definiert und Alkohol bezeichnet im Sinne der vorliegenden Erfindung eine Mischung im Sinnes eines Gemisches, Gemenges, eines Blends oder Verschnitts. Bevorzugt umfasst eine Mischung aus mindestens einem Material der Trägermatrix wie vorstehend definiert und Alkohol im Sinne der vorliegenden Erfindung nicht eine poröse Struktur des Materials der Trägermatrix, in die der Alkohol eingefüllt ist. Damit ist es insbesondere auch bevorzugt, dass die Mischung aus mindestens einem Material der Trägermatrix wie vorstehend definiert und Alkohol sowie die daraus hergestellte Komponente (b) oder Bonbonwarenschicht (b) nicht porös ist.

Erfindungsgemäß kann die Komponente (a) und/oder die Komponente (b) neben den vorstehend genannten Bestandteilen außerdem weitere Bestandteile, wie insbesondere einen oder mehrere weitere Lebensmittelzusatzstoffe enthalten.

Die Anzahl und Auswahl der weiteren Lebensmittelzusatzstoffe ergibt sich unter anderem aus der zu erzeugenden Geschmacksrichtung des Endprodukts sowie der gewünschten Form und Stabilität der Bonbonware und kann in weiten Bereichen variiert werden.

Im Rahmen der vorliegenden Erfindung können Lebensmittelzusatzstoffe der Komponenten (a) und/oder (b) ausgewählt werden aus der Gruppe, bestehend aus Verdickungsmitteln, Aromastoffen, Farbstoffen, Süßstoffen, Säuerungsmitteln, Milchprodukten, färbenden Lebensmitteln und Mischungen davon.

Verdickungsmittel (auch als Dickungsmittel oder Bindemittel bezeichnet) schließen dabei alle lebensmittelrechtlich zugelassenen Verdickungsmittel ein, vorzugsweise werden Verdickungsmittel ausgewählt aus der Gruppe, bestehend aus Alginsäure, Alginaten (Natrium-, Kalium-, Calcium-, Ammonium-, Propylenglycolalginat), Agar-Agar, Carrageen, Johannisbrotkernmehl, Guarkernmehl, Traganth, Gummi arabicum, Xanthan, Karaya, Tarakernmehl, Gellan, Pektine, Cellulosen (mikrokristalline Cellulose, Methyl-, Ethyl-, Hydroxypropyl-, Hydroxypropylmethyl-, Methylethyl-, Carboxymethyl, Natriumcarboxymethylcellulose), Celluloseether, Gelatine, Sago und Stärke. Verdickungsmittel aus der Gruppe der Hydrokolloide umfassen beispielsweise Stärke, Cellulose, Pektine, Gummi Arabicum, Galactomannane, Guarkernmehl, Johannisbrotkernmehl, Agar-Agar, Carrageen, Alginate, Gelatine, Xanthan und Dextrane. Bevorzugt wird das Verdickungsmittel ausgewählt aus der Gruppe umfassend Xanthan, Johannisbrotkernmehl, Carboxymethylcellulose wie Natriumcarboxymethylcellulose, Hydroxypropylcellulose sowie Celluloseether. Bevorzugte Verdickungsmittel für die Trägermatrix der Komponente (b) werden ausgewählt aus der Gruppe umfassend Xanthan, Johannisbrotkernmehl, Carboxymethylcellulose wie Natriumcarboxymethylcellulose, Hydroxypropylcellulose, Celluloseether oder Mischungen hiervon. Bevorzugt werden darin Cellulosen in fester Form oder pulverförmig verwendet. Bevorzugte Hydrokolloidgele der Trägermatrix in der Komponente (b) umfassen Gele von Xanthan oder Johannisbrotkernmehl..

Säuerungsmittel schließen dabei alle lebensmittelrechtlich zugelassenen Säuerungsmittel ein, vorzugsweise werden Säuerungsmittel ausgewählt aus der Gruppe, bestehend aus Apfelsäure, Weinsäure, Citronensäure und Milchsäure, insbesondere Milchsäure.

Süßstoffe schließen dabei alle lebensmittelrechtlich zugelassenen Süßungsmittel ein wie Acesulfam, Aspartam, Aspartam-Acesulfam-Salz, Cyclamat, Neohesperidin, Neotam, Saccharin, Sucralose, Steviosid (Stevia), Thaumatin, vorzugsweise werden Süßungsmittel ausgewählt aus der Gruppe bestehend aus Aspartam, Acesulfam, Saccharin und Stevia.

Milchprodukte schließen dabei alle lebensmittelrechtlich zugelassenen Milchprodukte ein, vorzugsweise werden Milchprodukte ausgewählt aus der Gruppe, bestehend aus Milch (sowie Produkte aus Milch und Milchbestandteilen), Kondensmilch, Schlagsahne und Milchpulver.

Ein weiterer bevorzugter Bestandteil des erfindungsgemäßen Bonbonwarenmaterials ist Wasser. Das Wasser wird im Allgemeinen zur Herstellung der Komponente (a) und/oder (b) des Bonbonwarenmaterials benötigt und kann produktionsbedingt in der Komponente (a) bzw. (b) und damit in der erfindungsgemäßen Bonbonware verbleiben, wobei bei der Herstellung von Hartkaramellen der Wasser-Anteil im Endprodukt insgesamt maximal 3 Gew.-%, bezogen auf die Komponenten (a) und (b) der Bonbonware insgesamt, beträgt. Bei der Herstellung von Weichkaramellen kann der Wasser-Anteil im Endprodukt insgesamt bis zu 10 Gew.-%, bezogen auf die Komponenten (a) und (b) der Bonbonware insgesamt, betragen. Etwaige wasserhaltige Füllungen bleiben dabei unberücksichtigt. In der Regel ist der Wassergehalt bei der Herstellung höher und wird durch das Einkochen der Komponenten (a) und (b) bei der Herstellung des Bonbonwarenmaterials jeweils reduziert, um die jeweils gewünschte Zähigkeit einzustellen. Die Komponente (b) wird bevorzugt im Wesentlichen wasserfrei gehalten, und zwar sowohl bei der Herstellung der Komponente (b), sowie in dem Bonbonwarenmaterial und im Endprodukt. Insbesondere weist darin die Komponente (b) bevorzugt einen Wassergehalt von maximal 0,5 Gew.-% auf.

Erfindungsgemäß bevorzugte Ausfürhungsformen betreffen Bonbonwaren, worin die zumindest zwei Komponenten (a) und (b) in zwei oder mehr, bevorzugt drei oder mehr im Wesentlichen einander abwechselnden oder aufeinanderfolgenden Schichten vorliegen. In derartigen Ausführungsformen entspricht dann die erfindungsgemäß definierte Komponente (a) einer Schicht (a), mit entsprechender Zusammensetzung und die erfindungsgemäß definierte Komponente (b) entspricht einer Schicht (b), mit entsprechender Zusammensetzung. Sofern im Rahmen der vorliegenden Erfindung von einer Schicht (a) oder (b) die Rede ist, weist diese somit die der Komponente (a) bzw. (b) entsprechende Zusammensetzung auf.

Damit sich der in der Komponente (b) enthaltene Alkohol nicht zu schnell bzw. so wenig wie möglich bis zu gar nicht bei der Herstellung, Konfektionierung und/oder Lagerung verflüchtigt, ist es bevorzugt, dass die Bonbonwaren an ihren Außenseiten die Komponente (a) aufweisen. Bei einer erfindungsgemäß bevorzugten zwei-, drei- oder mehrschichtigen Ausführungsform ist damit bevorzugt die äußerste Schicht der erfindungsgemäßen Bonbonware aus der Komponente (a) gebildet. Der aus dem Bonbonwarenmaterial gebildete Formkörper kann insgesamt massiv ausgebildet werden, beispielsweise als massives Bonbon oder massiver Lutscher.

Eine weitere bevorzugte Ausführungsform betrifft eine erfindungsgemäße Bonbonware, worin die Bonbonware, bestehend aus den sich abwechselnden Komponenten (a) / (b) / (a) ... etc. bzw. aus den mehrschichtig aufeinanderfolgenden Komponenten (a) / (b) / (a)... etc. insgesamt in Form eines Hohlkörpers oder einer Hülle ausgebildet ist, die einen Hohlraum oder Kern umschließt, der zusätzlich eine feste, halb-feste, fließfähige oder flüssige Füllung (c), insbesondere eine fließfähige oder flüssige alkoholhaltige Füllung (c), enthält. In derartigen Ausführungsformen ist die innerste Schicht, die die Grenzfläche zur Füllung (c) bildet, bevorzugt aus der Komponente (a) gebildet. In derartigen Ausführungsformen, worin das erfindungsgemäße mehrschichtige Bonbonwarenmaterial mit den Komponenten (a) und (b) zusätzlich einen mit einer Füllung (c) verfüllten Hohlkörper bildet, ist somit sowohl die äußerste Schicht als auch die innerste Schicht aus der Komponente (a) gebildet.

Es ist auch möglich, dass die beiden Komponenten (a) und (b) in dem Bonbonwarenmaterial ein massives Komprimat bilden, in dem der Alkohol im Wesentlichen homogen verteilt vorliegt ohne dass einzelne Schichten oder Grenzflächen zwischen den Komponenten (a) und (b) sichtbar sind. Derartige Komprimate können ebenfalls als massive Formkörper (massive Bonbons oder Lutscher) oder als Hohlkörper (enthaltend eine mögliche zusätzliche Füllmasse (c), wie oben beschrieben) ausgebildet werden.

Der Begriff alkoholhaltige Füllung im Sinne der vorliegenden Erfindung umfasst dabei alle Füllungen, insbesondere flüssige, viskose, sirupartige, gelartige und partikelförmige Füllungen, die Alkohol in Form von Ethanol enthalten.

Bevorzugt besteht die Komponente (a) zu einem überwiegenden Anteil aus dem mindestens einen Zucker, Zuckeraustauschstoff, zuckerähnlichen Stoff oder den Mischungen davon, wobei übliche lebensmittelrechtlich zugelassene Hilfs- und Zusatzstoffe, wie z.B. die vorstehend genannten zugesetzt sein können. Bevorzugt werden zu der Komponente (a) Milchprodukte wie vorstehend definiert zugesetzt.

Bevorzugt besteht die Komponente (b) zu einem überwiegenden Anteil aus dem Material der Trägermatrix wie dem mindestens einen Zucker, Zuckeraustauschstoff, zuckerähnlichen Stoff, Verdickungsmittel oder Hydrokolloidgel oder den Mischungen davon, wobei übliche lebensmittelrechtlich zugelassene Hilfs- und Zusatzstoffe, wie z.B. die vorstehend genannten zugesetzt sein können.

Der Anteil des mindestens einen Zuckers, Zuckeraustauschstoffs, zuckerähnlichen Stoffs oder der Mischung davon in der alkoholfreien Komponente (a) beträgt bevorzugt 65 bis 100 Gew.-%, bevorzugter von 90 bis 99 Gew.-%, noch bevorzugter von 93 bis 96 Gew.-%, jeweils bezogen auf die gesamte Komponente (a) in der erfindungsgemäßen Bonbonware, um insbesondere die Beständigkeit der Bonbonware gegenüber dem in der Komponente (b) und gegebenenfalls im Kern enthaltenen Alkohol, alkoholischen und alkoholhaltigen Flüssigkeiten bzw. Füllungen zu erreichen.

Der Anteil der Trägermatrix, wie z.B. des mindestens einen Zuckers, Zuckeraustauschstoffs, zuckerähnlichen Stoffs, Verdickungsmittels, Hydrokolloidgels oder der Mischung davon, in der Komponente (b) kann 40 bis < 100 Gew.-%, 50 bis 90 Gew.-%, 60 bis 80 Gew.-%, jeweils bezogen auf die gesamte Komponente (b) in der erfindungsgemäßen Bonbonware betragen, um insbesondere den Alkohol bzw. die alkoholischen Flüssigkeiten darin aufzunehmen und zu binden und für die Verarbeitung zu einem Formkörper im Wesentlichen homogen darin verteilt zu halten. Je nach gewähltem Trägermatrixmaterial kann er jedoch auch deutlich niedriger gewählt werden. Maßgeblich ist eine Menge, die eine geeignete Viskositätseinstellung der Komponente (b) ermöglicht.

Der Anteil des Ethanols bzw. der alkoholischen Flüssigkeit in der Komponente (b) kann 0,1 bis 60 Gew.-%, 10 bis 50 Gew.-%, 20 bis 40 Gew.-%, jeweils bezogen auf die gesamte Komponente (b) in der erfindungsgemäßen Bonbonware betragen. Je nach gewähltem Trägermatrixmaterial kann er jedoch auch deutlich höher gewählt werden, beispielsweise im Bereich von 10 bis 98 Gew.-% oder bis zu 95 Gew.-%. Der Alkoholgehalt in dem gesamten Bonbonwarenmaterial, umfassend die Komponente (a) und (b), kann 0,1 bis 50 Gew.-%, 0,1 bis 40 Gew.-%, 0,1 bis 30 Gew.-%, 0,1 bis 20 Gew.-%, 0,1 bis 10 Gew.-%, 0,1 bis 5 Gew.-%, oder 0,5 bis 50 Gew.-%, 0,5 bis 40 Gew.-%, 0,5 bis 30 Gew.-%, 0,5 bis 20 Gew.-%, 0,5 bis 10 Gew.-%, 0,5 bis 5 Gew.-%, oder 1,0 bis 50 Gew.-%, 1,0 bis 40 Gew.-%, 1,0 bis 30 Gew.-%, 1,0 bis 20 Gew.-%, 1,0 bis 10 Gew.-%, 1,0 bis 5 Gew.-%, jeweils bezogen auf das gesamte Bonbonwarenmaterial (ohne mögliche zusätzliche alkoholische Füllung), betragen, um insbesondere beim Verzehr der erfindungsgemäßen Bonbonware bzw. des Bonbonwarenmaterials ein Geschmackserlebnis des Alkoholaromas zu erzeugen.

In Ausführungsformen, worin das Bonbonwarenmaterial der erfindungsgemäßen Bonbonware in Form eines Hohlkörpers oder einer Hülle ausgebildet ist, die einen Kern bzw. eine Füllung (c) umschließt, ist bevorzugt eine alkoholhaltige Füllung (c) vorgesehen. Eine derartige alkoholhaltige Füllung enthält vorzugsweise Glukosesirup, Maltitolsirup oder Sorbitol (oder Mischungen davon), was der Füllung einen süßen Geschmack verleiht. Der Glukosesirup-Anteil, Maltitolsirup-Anteil oder der Sorbitol-Anteil einer derartigen alkoholhaltigen Füllung beträgt vorzugsweise 55 bis 99 Gew.-%, insbesondere 61 bis 96 Gew.-%, jeweils bezogen auf das vollständige Füllmaterial (c).

Eine derartige alkoholhaltige Füllung (c) enthält neben Glukosesirup, Maltitolsirup und/oder Sorbitol Alkohol, wobei der Alkoholgehalt in einer solchen alkoholhaltigen Füllung in einem Kern des Formkörpers vorzugsweise 2 bis 40 Gew.-%, insbesondere 5 bis 35 Gew.-%, jeweils bezogen auf das vollständige Füllmaterial (c) im Kern, beträgt.

Derartige alkoholhaltige Füllungen können darüber hinaus außerdem mindestens einen Lebensmittelzusatzstoff, wie vorstehend definiert, enthalten. Die Anzahl und Auswahl der Lebensmittelzusatzstoffe ergibt sich aus der zu erzeugenden Geschmacksrichtung des Endprodukts und kann in weiten Bereichen variieren und schließt insbesondere die vorstehend definierten Lebensmittelzusatzstoffe ein.

Im Rahmen der vorliegenden Erfindung kann der mindestens eine Lebensmittelzusatzstoff des Füllmaterials (c) im Kern insbesondere ausgewählt werden aus der Gruppe, bestehend aus Aromastoffen, Farbstoffen, insbesondere Titandioxid, Säuerungsmitteln, Milchprodukten, Süßstoffen, Verdickungsmitteln und Mischungen davon.

Falls in einer erfindungsgemäßen Füllung (c) im Kern Milchprodukte enthalten sind, beträgt der Anteil vorzugsweise 0,1 bis 15 Gew.-%, jeweils bezogen auf das vollständige Füllmaterial (c) im Kern.

Falls in einer erfindungsgemäßen Füllung (c) im Kern ein Säuerungsmittel enthalten ist, beträgt der Anteil vorzugsweise 0,1 bis 5 Gew.-%, insbesondere 0,5 bis 3 Gew.-%, jeweils bezogen auf das vollständige Füllmaterial (c) im Kern.

Weiterer Gegenstand der vorliegenden Erfindung ist ein Verfahren zur Herstellung der erfindungsgemäßen Formkörper, welches die folgenden Verfahrensschritte umfasst:
(1) Herstellung einer viskosen, modellierbaren, zähplastischen, streich- oder fließfähigen Masse der alkoholfreien Komponente (a) durch Erwärmen einer Mischung oder Schmelze der gewünschten Bestandteile der Komponente (a);
(2) Herstellung der Komponente (b) durch Bereitstellen des Materials der Trägermatrix, bevorzugt ausgewählt aus mindestens einem Zucker, Zuckeraustauschstoff, zuckerähnlichen Stoff, Verdickungsmittel, Hydrokolloidgel oder Mischungen davon, jeweils wie vorstehend definiert, gegebenenfalls Einmischen weiterer Zusatzstoffe, Einrühren des Ethanols oder der alkoholischen Flüssigkeit in das Material der Trägermatrix unter Erhalt einer im Wesentlichen homogenen viskosen, modellierbaren, zähplastischen, streich- oder fließfähigen Mischung;
(3) Einbetten oder Einschließen der Komponente (b) aus Schritt (2) in der viskosen, modellierbaren, zähplastischen, streich- oder fließfähigen Masse der alkoholfreien Komponente (a) aus Schritt (1) unter Ausbildung eines Bonbonwarenmaterials, in dem die Komponenten (a) und (b) jeweils eine Grenzfläche zueinander aufweisen können und worin der Alkohol in dem gesamten Bonbonwarenmaterial im Wesentlichen homogen verteilt vorliegt;
(4) Formgebung des aus Schritt (3) erhaltenen Bonbonwarenmaterials unter Erhalt eines Formkörpers, der gegebenenfalls in Form eines Hohlkörpers mit mindestens einer Öffnung ausgebildet sein kann;
(5) gegebenenfalls Bereitstellung einer Füllmasse (c);
(6) gegebenenfalls Verfüllen der Füllmasse (c) aus Schritt (5) in den Formkörper in Form eines Hohlkörpers mit mindestens einer Öffnung aus Schritt (4) und Verschließen der mindestens einen Öffnung des Formkörpers;
(7) gegebenenfalls Einbringen eines Stiels in den Formkörper aus Schritt (4) oder (6)
(8) Abkühlen des Formkörpers unter Erhalt der Bonbonware.

In Schritt (1) werden zur Herstellung der Komponente (a) zunächst der mindestens eine Zucker, Zuckeraustauschstoff, zuckerähnliche Stoff oder Mischungen davon und Wasser im Gew.-%-Verhältnis von im Allgemeinen 75:25 (Zucker / Zuckeraustauschstoff / zuckerähnlicher Stoff : Wasser) bis 99:1, insbesondere im Gew.-%-Verhältnis von 90:10 bis 99,5:0,5, in einem Satzkocher oder in einem Koch-Rührwerk bei Temperaturen zwischen 150 °C und 170 °C, beispielsweise bei 170 °C gekocht. Parallel oder im Anschluss wird ein Vakuum zur Herabsetzung des Wassergehaltes angelegt.

Danach wird das Vakuum belüftet und gegebenenfalls werden die für das jeweilige Endprodukt gewünschten zusätzlichen Lebensmittelzusatzstoffe hinzugegeben und in einem Aromamischgerät, z. B. von Ruffinatti^{®}, oder manuell vermengt.

Bevorzugt liegt die Masse der alkoholfreien Komponente (a) aus Schritt (1) in Form einer Schmelze (z. B. Zuckerschmelze) des mindestens einen Zuckers, Zuckeraustauschstoffs, zuckerähnlichen Stoffs oder der Mischung davon vor.

In Schritt (2) werden zur Herstellung der Komponente (b) zunächst die Materialien der Trägermatrix, wie vorstehend definiert, wie bevorzugt der mindestens eine jeweils pulverförmige Zucker, Zuckeraustauschstoff, zuckerähnliche Stoff, das pulverförmige Verdickungsmittel, das Hydrokolloidgel oder Mischungen davon, mit gegebenenfalls für das jeweilige Endprodukt gewünschten Lebensmittelzusatzstoffen, insbesondere z.B. mit einem Verdickungsmittel wie bevorzugt Xanthan, vermischt und mit dem Alkohol (Ethanol oder eine alkoholische Flüssigkeit) unter intensivem Verrühren homogen vermischt.

Bevorzugt erfolgt in Schritt (2) die Herstellung der Komponente (b) durch Einmischen des Ethanols oder der alkoholischen Flüssigkeit in ein festes oder pulverförmiges Material der Trägermatrix, welches ausgewählt ist aus der Gruppe umfassend feste oder pulverförmige Zucker, Zuckeraustauschstoffe oder zuckerähnliche Stoffe, wie vorstehend definiert, feste oder pulverförmige Verdickungsmittel aus der Gruppe der Cellulosen, insbesondere Hydroxypropylcellulose und Natriumcarboxymethylcellulose, sowie Celluloseether.

In Schritt (3) erfolgt das Einbetten oder Einschließen der alkohol-haltigen Komponente (b) aus Schritt (2) in der fließfähigen Masse der alkoholfreien Komponente (a) aus Schritt (1) unter Ausbildung eines fließfähigen oder weichen, bzw. plastisch-formbaren Bonbonwarenmaterials, in dem die Komponenten (a) und (b) mindestens eine Grenzfläche zueinander aufweisen können, und worin der Alkohol im Wesentlichen homogen verteilt vorliegt.

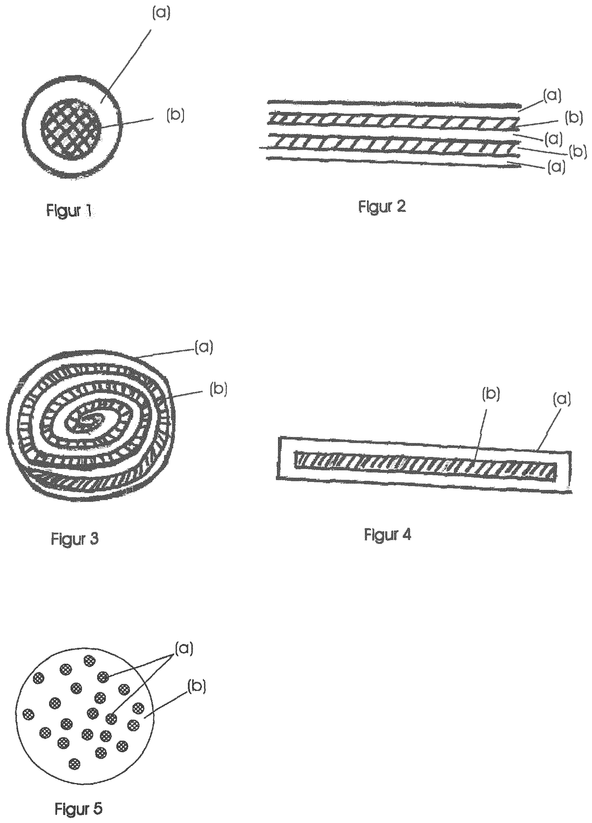

In einer Verfahrensvariante (3a) kann das Einschließen der Masse der Komponente (b) erfolgen, indem die Mischung der Komponente (b) aus Schritt (2) mit einer Deckschicht der Masse der alkoholfreien Komponente (a) umgeben oder umhüllt wird. Dadurch kann gemäß Schritt (3a) eine massive zweischichtige Bonbonware erhalten werden, indem eine ggf. vorgeformte Menge der Komponente (b) vollständig von der Komponente (a) aus Schritt (1) umhüllt oder ummantelt wird. Dabei bildet die Komponente (a) eine Art Hüllschicht um eine Art massiven Kern, der aus der Komponente (b) gebildet ist, aus, wie in Figur 1 schematisch dargestellt. Derartige Ausführungsformen weisen keinen mit einer Flüssigkeit verfüllten und aus der Komponente (a) gebildeten Hohlraum auf, und unterscheiden sich somit von bekannten Süßwaren mit einer flüssig-verfüllten Hülle-Kern-Struktur, wie vorstehend beschrieben.

In einer Verfahrensvariante (3b) kann insbesondere ein drei- oder mehrschichtiges Zuckerwarenmaterial hergestellt werden. Darin wird zunächst die viskose, modellierbare, zähplastische, streich- oder fließfähige Komponente (a) aus Schritt (1) flächig ausgestrichen oder ausgegossen und darauf eine Schicht der viskosen, modellierbaren, zähplastischen, streich- oder fließfähigen Komponente (b) durch Ausstreichen oder Aufgießen aufgebracht. Das Herstellen der Schichten der Komponenten (a) und (b) kann durch herkömmliche Verfahren wie Gießen, Ausstreichen, Rakeln, Aufsprühen etc. erfolgen. Bevorzugt kann das Aufbringen der Schichten aufeinander bei einer Verarbeitungstemperatur von ca. 70 bis 85 °C, bevorzugter 70 bis 75 °C erfolgen, da die Komponenten (a) und (b) aus Schritt (1) bzw. (2) bei dieser Temperatur eine optimale Verarbeitungsplastizität und geeignete Viskosität aufweisen.

In einer Verfahrensvariante (3b) i) erfolgt das Einbetten der Komponente (b) durch Aufbringen der viskosen, modellierbaren, zähplastischen, streich- oder fließfähigen Komponente (b) aus Schritt (2) auf einer Schicht der viskosen, modellierbaren, zähplastischen, streich- oder fließfähigen Masse der alkoholfreien Komponente (a) aus Schritt (1) und Aufbringen mindestens einer weiteren Schicht der viskosen, modellierbaren, zähplastischen, streich- oder fließfähigen Masse der alkoholfreien Komponente (a) auf der Schicht der Komponente (b), gegebenenfalls Aufbringen weiterer Schichten der Komponenten (b) und (a), wobei die äußersten Schichten des so gebildeten Bonbonwarenmaterials aus der alkoholfreien Komponente (a) gebildet werden.

Dadurch wird die Schicht der Komponente (b) von zwei Schichten der Komponente (a) eingeschlossen. Durch das anschließende Aufbringen weiterer einander abwechselnder Schichten der Komponenten (b) und (a) können im Grunde beliebig viele weitere Schichten (b) und (a) in abwechselnder Reihenfolge in gleicher Weise erhalten werden, sodass ein mehrschichtiges Bonbonwarenmaterial mit einander abwechselnden Schichten (a), (b), (a) etc. entsteht, wobei die Abschlussschicht bevorzugt aus einer Schicht (a) gebildet wird, so dass bevorzugt die jeweils äußersten Schichten aus Komponente (a) gebildet sind, wie in Figur 2 schematisch dargestellt.

In einer Verfahrensvariante (3b) ii) erfolgt das Einbetten der Komponente (b) durch Aufbringen der viskosen, modellierbaren, zähplastischen, streich- oder fließfähigen Komponente (b) aus Schritt (2) auf einer Schicht der viskosen, modellierbaren, zähplastischen, streich- oder fließfähigen Masse der alkoholfreien Komponente (a) aus Schritt (1) und Einrollen des so gebildeten schichtförmigen Bonbonwarenmaterials, wobei die äußerste Schicht der so gebildeten mehrschichtigen Rolle aus der alkoholfreien Komponente (a) gebildet ist.

Darin wird beispielsweise ein zunächst hergestelltes zweischichtiges Schichtmaterial umfassend eine Schicht (a) und eine Schicht (b) eingerollt, so dass eine Art mehrschichtige Schnecke, wie in Figur 3 schematisch dargestellt, gebildet wird. Das Einrollen der zwei aufeinanderliegenden Schichten (a) und (b) erfolgt dabei so, dass die Schicht (a) über die darauf aufliegende Schicht (b) eingerollt wird und dadurch die äußerste Schicht der so gebildeten Rolle oder Schnecke aus der Komponente (a) gebildet ist. Grundsätzlich ist es auch möglich, zunächst ein drei- oder mehrschichtiges Bonbonwarenmaterial herzustellen (beispielweise wie in Variante (3b) i) beschrieben), und dieses drei- oder mehrschichtige Schichtmaterial entsprechend einzurollen. Außerdem ist es möglich, das Einrollen über einen Stab oder ein Rohr oder ein entsprechend geeignetes Werkstück auszuführen, sodaß ein Hohlraum innerhalb der Schnecke entsteht. Dieser Hohlraum kann dann mit einer Füllung (c) verfüllt werden, ähnlich wie nachfolgend ausgeführt.

In einer Verfahrensvariante (3b) iii) erfolgt das Einbetten der Komponente (b) durch Aufbringen der viskosen, modellierbaren, zähplastischen, streich- oder fließfähigen Komponente (b) auf einer Schicht der viskosen, modellierbaren, zähplastischen, streich- oder fließfähigen Masse der alkoholfreien Komponente (a) und Falten des so gebildeten schichtförmigen Bonbonwarenmaterials, derart dass ein mehrschichtiges Bonbonwarenmaterial gebildet wird, wobei die äußerste Schicht des so gebildeten Bonbonwarenmaterials aus der alkoholfreien Komponente (a) gebildet wird.

Darin wird beispielsweise ein zunächst hergestelltes zweischichtiges Schichtmaterial umfassend eine Schicht (a) und eine Schicht (b) ein oder mehrmals übereinander gefaltet (kaschiert), so dass ein flächiges, mehrschichtiges Bonbonwarenmaterial, wie in Figur 4 schematisch dargestellt, gebildet wird. Das Falten des zweischichtigen Schichtmaterials kann durch Anwendung bekannter Falttechniken, wie beispielsweise aus der Herstellung von Blätterteigen oder für Croissants bekannt, erfolgen. Das Falten wird dabei so durchgeführt, dass die Schicht (a) über der darauf aufliegenden Schicht (b) zu liegen kommt und dadurch die jeweils äußersten Schichten des so gebildeten Bonbonwarenmaterials aus der Komponente (a) gebildet sind. Grundsätzlich ist es auch möglich, zunächst ein drei- oder mehrschichtiges Bonbonwarenmaterial herzustellen (beispielweise wie in Variante (3b) i) beschrieben), und dieses drei- oder mehrschichtige Schichtmaterial entsprechend zu falten. Außerdem ist es möglich, das Falten über einen Stab oder ein Rohr oder ein entsprechend geeignetes Werkstück auszuführen, sodaß ein Hohlraum innerhalb des gefalteten Bonbonwarenmaterials entsteht. Dieser Hohlraum kann dann mit einer Füllung (c) verfüllt werden, ähnlich wie nachfolgend ausgeführt.

In einer Verfahrensvariante (3c) kann ein Bonbonwarenmaterial hergestellt werden, worin die Komponente (b) in der Komponente (a) im Wesentlichen homogen verteilt vorliegt, wie in Figur 5 schematisch dargestellt. Darin erfolgt das Einschließen oder Einbetten der Komponente (b) durch Eintropfen, Einrühren oder Verkneten der zunächst hergestellten Komponente (b) in die viskosen, modellierbaren, zähplastischen, streich- oder fließfähige Masse der alkoholfreien Komponente (a).

Grundsätzlich kann das Einschließen oder Einbetten der Komponente (b) in die Komponente (a) durch bekannte Verfahren zur Herstellung von Hart- und Weichkaramellen erfolgen. So ist es in einer Verfahrensvariante (3d) außerdem möglich und bevorzugt, Stränge aus den viskosen, modellierbaren, zähplastischen, streich- oder fließfähigen Komponenten (a) und (b) miteinander zu verdrillen und in geeigneten Kegelrollern oder Egalisierrollen zu einem mehrschichtigen Bonbonwarenmaterial zu verarbeiten bzw. zu verkneten, worin die Komponenten (a) und (b) in im Wesentlichen einander abwechselnden Schichten vorliegt. Bevorzugt werden dazu Stränge der Komponenten (a) und (b) in einem Verhältnis von 80 : 20 bis 20 : 80 Gew.%, bevorzugter 70 : 30 bis 30 : 70 Gew.%, noch bevorzugter 60 : 40 bis 40 : 60 Gew.% miteinander kombiniert.

Je nach Verfahrensführung kann das Kaschieren, Schichten, Verdrillen und Verkneten der Komponenten (a) und (b), wie in den vorstehenden Verfahrensvarianten beschrieben, auch zu einem Bonbonwarenmaterial führen, worin die beiden Komponenten (a) und (b) derart miteinander komprimiert werden, dass Grenzflächen oder einzelne Schichten nicht mehr ohne weiteres erkennbar sind. Derartige Komprimate zeichnen sich ebenfalls durch eine im Wesentlichen homogene Verteilung des Alkohols in dem gesamten komprimierten Bonbonwarenmaterial aus, worin der Alkohol lagerstabil eingeschlossen ist und somit ebenfalls die oben genannten Vorteile der vorliegenden Erfindung aufweist.

Das in Schritt (3) erhaltene Bonbonwarenmaterial kann gegebenenfalls zusätzlich mit der Komponente (a) beschichtet werden.

Bevorzugt ist die Verfahrensvariante (3b), ganz besonders bevorzugt ist daraus die Variante (3b) iii), worin ein Falten des Schichtmaterials erfolgt, sowie die Verfahrensvariante (3d) und eine Verfahrensführung unter Erhalt eines Komprimats.

Das so in den Verfahrensvarianten des Schritts (3) erhaltene Bonbonwarenmaterial wird in Schritt (4) zu dem gewünschten erfindungsgemäßen Formkörper geformt. Das Verformen erfolgt nach bekannten Formungsmethoden, wie z.B. unter Verwendung eines Kegelrollers zur Ausformung eines Strangs aus dem in Schritt (3) hergestellten Bonbonwarenmaterial (bevorzugt bei Temperaturen zwischen 55 und 65 °C), von Egalisierrollen zur Verjüngung und weiteren Formung des vorgeformten Bonbonwarenmaterials, z.B. in Form eines Strangs, (bevorzugt bei Temperaturen zwischen 40 und 45 °C). Anstelle eines Kegelrollers kann auch ein Extruder eingesetzt werden.

Anschließend kann ein Portionieren oder Zuschneiden erfolgen, beispielsweise mittels Prägemaschinen. Durch Zuschneiden, Prägen, Drehen oder Quetschen des vorgeformten Bonbonwarenmaterials, z.B. in Form eines Strangs, können die gewünschten Formen und/oder Teile erhalten werden. Dieser Vorgang erfolgt bevorzugt unter Kühlung oder gefolgt von Kühlung auf Temperaturen zwischen 16 und 18 °C.

Für Ausführungsformen, worin das aus den Komponenten (a) und (b) gebildete Bonbonwarenmaterial einen Hohlkörper oder eine Hülle ausbildet, die einen Kern mit einer alkoholhaltigen Füllung umschließt, erfolgt die Formgebung des Bonbonwarenmaterials zu dem Formkörper bevorzugt durch Einbringen des Bonbonwarenmaterials aus Schritt (3) in einen Kegelroller, der mit einem Befüllungsrohr versehen ist, und der so gestaltet ist, dass dadurch ein Hohlkörper aus dem Bonbonwarenmaterial gebildet werden kann, in den durch das Befüllungsrohr die Füllmasse (c) aus Schritt (5) in den Formkörper eingefüllt (gepumpt) werden kann. Grundsätzlich ist dieses Verfahren zur Herstellung von befüllten Hohlkörperzuckerwaren bekannt. Anstelle eines Kegelrollers kann auch hier ein Extruder eingesetzt werden.

Wie vorstehend bereits erwähnt, ist es auch möglich, den aus den Komponenten (a) und (b) gebildeten Hohlkörper auszubilden, indem das Einrollen oder Falten gemäß den Verfahrensvarianten (3b) ii) und iii) bzw. (3d) über ein geeignetes Werkstück wie einen Stab oder ein Rohr erfolgt, durch den der Hohlraum gebildet wird. Auch in dieser Variante kann ein Befüllungsrohr verwendet werden, durch das die Füllmasse (c) aus Schritt (5) in den Formkörper eingefüllt (gepumpt) werden kann.

In Schritt (5) wird zur Herstellung einer Füllmasse für den Kern entsprechender erfindungsgemäßer gefüllter Formkörper der Füllungsgrundstoff, z.B. Glukosesirup, Maltitolsirup oder Sorbitol, gegebenenfalls unter Zusatz weiterer Zusatzstoffe, insbesondere Verdickungsmittel wie vorstehend definiert, zunächst bei Temperaturen zwischen 100 °C und 130 °C, beispielsweise bei 120 °C in einem Satzkocher oder einem Koch-Rührwerk gekocht. Dadurch wird der Wasser-Anteil der Füllmasse reguliert und die Zähigkeit der Füllmasse eingestellt. Je geringer der Wasser-Anteil ist, desto zäher ist die Füllmasse.

Wenn die Füllmasse (c) für den Kern Milchprodukte enthält, werden diese zunächst mit dem Glukosesirup, dem Maltitolsirup und/oder dem Sorbit sowie ggf. mit den weiteren Zusatzstoffen, wie insbesondere Verdickungsmitteln, vermengt und bei Temperaturen zwischen 100 °C und 130 °C, beispielsweise bei 110 °C gekocht.

Anschließend wird die Füllmasse (c) für den Kern auf Temperaturen kleiner als 78 °C abgekühlt und die für das jeweilige Endprodukt benötigten Lebensmittelzusatzstoffe hinzugegeben und vermischt.

Als letztes wird zur Füllmasse (c) für den Kern zusätzlich Alkohol (Ethanol oder eine alkoholhaltige Flüssigkeit) hinzugegeben. Die Temperatur ist weiterhin geringer als 78 °C, um das Sieden des Alkohols zu verhindern.

In Schritt (6) wird dann gegebenenfalls die Füllmasse (c) für den Kern beispielsweise durch das Befüllungsrohr im Kegelroller in den hergestellten hohlen Formkörper aus dem erfindungsgemäßen Bonbonwarenmaterial gefüllt (gepumpt). Die Füllmasse hat beim Einfüllen in den Hohlkörper eine Temperatur kleiner als 78 °C.

Die mindestens eine Öffnung des Hüllenformkörpers wird anschließend verschlossen. Dies kann beispielsweise durch Zuschneiden, Prägen, Drehen oder Quetschen des vorgeformten befüllten Bonbonwarenmaterials, z.B. in Form eines befüllten Strangs, erfolgen. In diesem Vorgang können auch die gewünschten Formen und/oder Teile der befüllten Bonbonwaren erhalten werden. Nachdem die Füllmasse in den Hüllenformkörper eingefüllt und die mindestens eine Öffnung verschlossen wurde, wird auf 20 bis 40 °C abgekühlt.

Durch Abkühlen des geformten und gegebenenfalls befüllten Bonbonwarenmaterials wird die erfindungsgemäße Bonbonware erhalten. Das Abkühlen muss nicht zwangsläufig als letzter Schritt erfolgen, sondern kann auch während bzw. kontinuierlich im Zuge der Formung, Befüllung und/oder Verschließung und Portionierung erfolgen.

Bei Ausführungsformen, die in Form eines Lutschers gebildet sind, wird in Schritt (7) ein Stiel in das noch zäh-plastische Bonbonwarenmaterial eingedrückt. Es können massive oder mit einer Füllung (c) befüllte Lutscher hergestellt werden.

Insbesondere durch geeignete Einstellung des Restwassergehaltes kann in den vorstehend beschriebenen Verfahren eine Bonbonware in Form von Hart- oder Weichkaramellen, wie hierin definiert, erhalten werden.

Danach wird das fertige Produkt abgekühlt und konfektioniert, z.B. in geeigneten Verpackungsmaterialien verpackt.

Gegenstand der Erfindung sind auch die nach den vorstehend beschriebenen Verfahren erhältlichen Bonbonwaren, insbesondere in Form von Hart- und / oder Weichkaramellen, wie oben definiert.

Die vorliegende Erfindung wird anhand der nachfolgenden Beispiele näher erläutert, welche die vorliegende Erfindung jedoch nicht beschränken.

### Beschreibung der Figuren:

Die in der Figurenbeschreibung verwendeten Bezugszeichen weisen folgende Bedeutung auf:
   (a) Komponente / Schicht (a)
   (b) Komponente / Schicht (b)

- **Figur 1:**: Querschnitt durch eine erfindungsgemäße Bonbonware, erhältlich wie in Verfahrensvariante (3a) beschrieben
- **Figur 2:**: Querschnitt durch eine erfindungsgemäße mehrschichtige Bonbonware, erhältlich durch Aufbringen mehrerer Schichten der Komponenten (a) und (b), wie in Verfahrensvariante (3b) i) beschrieben
- **Figur 3:**: Querschnitt durch eine erfindungsgemäße mehrschichtige Bonbonware, erhältlich durch Einrollen der schichtförmig aufgebrachten Komponenten (a) und (b), wie in Verfahrensvariante (3b) ii) beschrieben
- **Figur 4:**: Querschnitt durch eine erfindungsgemäße mehrschichtige Bonbonware, erhältlich durch Falten der schichtförmig aufgebrachten Komponenten (a) und (b), wie in Verfahrensvariante (3b) iii) beschrieben
- **Figur 5:**: Querschnitt durch eine erfindungsgemäße Bonbonware, erhältlich durch Einrühren oder Einkneten der Komponente (b) in eine Masse der Komponente (a), wie in Verfahrensvariante (3c) beschrieben

### Beispiele

Die folgenden Beispiele beziehen sich auf erfindungsgemäße Bonbonwaren umfassend zumindest zwei Komponenten (a) und (b), worin
(a) eine alkoholfreie Komponente ist, enthaltend mindestens einen Zucker, Zuckeraustauschstoff, zuckerähnlichen Stoff oder Mischungen davon, und
(b) eine Komponente ist, enthaltend eine Mischung aus Ethanol oder einer alkoholischen Flüssigkeit mit einem Trägermatrixmaterial, ausgewählt aus mindestens einem Zucker, Zuckeraustauschstoff, zuckerähnlichen Stoff, Verdickungsmittel, Hydrokolloidgel oder Mischungen davon,
wobei die Komponenten (a) und (b) in der Bonbonware mindestens eine Grenzfläche zueinander aufweisen können und jeweils als massive, feste Komponente in der Bonbonware vorliegen.

### Beispiel 1: Bonbonware ohne alkoholische Füllung in einem Kern

Nach der Zusammensetzung gemäß Tabelle 1 und 2 wurde eine erfindungsgemäße Bonbonware in Form eines Bonbons oder Lutschers gemäß der Zusammensetzung nach Tabelle 3 und gemäß Verfahrensvariante (3b) iii) hergestellt.

**Tabelle 1: Komponente (a)**

| Nach dem Kochprozess | |
|---|---|
| **Rohstoff** | **Menge [Gew.-%]** |
| Isomalt | 79,0 |
| Polydextrose | 14,0 |
| Sorbit | 6,0 |
| Wasser | 1,0 |

**Tabelle 2: Komponente (b)**

| **Rohstoff** | **Menge [Gew.-%]** |
|---|---|
| Polydextrose | 66,67 |
| Alkohol | 33,33 |

Die Komponenten (a) und (b) wurden entsprechend den in den Tabellen 1 und 2 angegebenen Zusammensetzungen hergestellt.

Die Komponente (a) wurde dabei durch Mischen von Isomalt, Sorbit und Polydextrose mit Wasser (Kochmasse) und Kochen bei 165 °C in einem Satzkocher erhalten. Gegebenenfalls können anschließend weitere Lebensmittelzusatzstoffe, wie vorstehend definiert, hinzugegeben und mit der Kochmasse in einem Aromamischgerät verrührt werden.

Die Komponente (b) wurde durch Mischen von Polydextrose und Alkohol hergestellt.

Anschließend wurde die Komponente (a) flächig ausgestrichen und darauf die Komponente (b) ausgestrichen. Aus dem so erhaltenen zweischichtigen Bonbonwarenmaterial wurde durch Falten der Schichten übereinander ein mehrschichtiges Bonbonwarenmaterial hergestellt, welches anschließend im Kegelroller und mittels Egalisierrollen, sowie Prägemaschinen in die gewünschte Form überführt wurde. Bei Ausführungsformen in Form eines Lutschers wird anschließend ein Stil in das noch zähplastische Bonbonwarenmaterial eingedrückt.

Nach Abkühlen kann die so erhaltene Bonbonware verpackt werden.

Tabelle 3: Zusammensetzung der Bonbonware (gesamt)

| **Total** | **Menge [Gew.-%]** |
|---|---|
| Komponente (a) gesamt | 87,67 |
| Komponente (b) gesamt | 12,33 |

Alkoholgehalt in der Bonbonware (gesamt): 4,11 Gew.-%.

### Beispiel 2: Bonbonware mit Kern mit alkoholischer Füllung (20 % Alkoholgehalt in der Füllung)

Das Bonbonwarenmaterial wurde gemäß Beispiel 1 hergestellt.

Zusätzlich wurde gemäß der Zusammensetzung nach Tabelle 4 ein Füllmaterial (c) für die alkoholhaltige Füllung einer erfindungsgemäßen Bonbonware in Form eines gefüllten Bonbons oder eines gefüllten Lutschers gemäß der Zusammensetzung nach Tabelle 5 hergestellt.

**Tabelle 4: Füllung (c) ("alkoholhaltige Füllung")**

| **Rohstoff** | **Menge [Gew.-%]** |
|---|---|
| Maltitolsirup | 75,00 |
| Alkohol | 25,00 |

Statt Maltitolsirup kann für die Füllung auch Glukose-Sirup oder Sorbitol verwendet werden. Gegebenenfalls können außerdem weitere Lebensmittelzusatzstoffe, wie vorstehend definiert, hinzugegeben und mit der Füllmasse verrührt werden.

Die so erhaltene alkoholhaltige Füllung wird über ein am Kegelroller angebrachtes Befüllungsrohr in den in dem Kegelroller hergestellten hohlen Formkörper aus dem Bonbonwarenmaterial gepumpt. Die mindestens eine Öffnung des befüllten Formkörpers wird durch Abschneiden bzw. Abquetschen verschlossen. Bei Ausführungsformen in Form eines Lutschers wird anschließend ein Stil in das noch zähplastische Bonbonwarenmaterial eingedrückt.

Nach Abkühlen kann die so erhaltene Bonbonware verpackt werden.

**Tabelle 5: Zusammensetzung der Bonbonware (gesamt)**

| **Total** | **Menge [Gew.-%]** |
|---|---|
| Bonbonwarenmaterial (gesamt) | 80,00 |
| alkoholhaltige Füllung | 20,00 |

Alkoholgehalt im Bonbonwarenmaterial gesamt (Komponenten (a) + (b)): 4,11 Gew.-% Alkoholgehalt in der Bonbonware gesamt (Komponenten (a) + (b) + alkoholhaltige Füllung): 8,29 Gew.-%.

### Beispiel 3: Weitere Bonbonwaren, wahlweise herstellbar als Hohlkörper mit alkoholischer Füllung oder ohne Füllung, gemäß den vorstehenden Beispielen 1 und 2 mit variierender Komponente (b)

**Tabelle 3: weitere mögliche Komponenten (b)**

| **Beispiel** | **Rohstoff** | **Menge [Gew.-%]** |
|---|---|---|
| 3-1 | Polydextrose | 17,5 |
| | Dextrin | 41 |
| | Celluloseether | 1,8 |
| | Alkohol | 39,7 |
| 3-2 | Hydroxypropylcellulose | 5 |
| | Alkohol | 95 |
| 3-3 | Hydroxypropylcellulose | 65 |
| | Alkohol | 35 |
| 3-4 | Komponente 3-3 | 72 |
| | Polydextrose | 28 |
| 3-5 | Komponente 3-4 | 72 |
| | Polydextrose | 28 |
| 3-6 | Polydextrose | 34 |
| | Alkohol | 66 |
| 3-7 | Maltodextrin auf Basis von Tapiokastärke | 30 |
| | Alkohol | 70 |

Die vorstehenden Komponenten (b) der Tabelle 3 können mit den Komponenten (a) der Beispiele 1 und 2 oder mit anderen geeigneten erfindungsgemäßen Zusammensetzungen zur Bildung der Komponente (a) zu den erfindungsgemäßen Bonbonwaren hergestellt werden. Dabei können die Verfahren wie in Beispiel 1 und 2 beschrieben angewendet werden oder eines der anderen beschriebenen erfindungsgemäßen Verfahren. Aus den beschriebenen Komponenten können Bonbonwaren in Form von Bonbons oder Lutschern hergestellt werden, wie hierin beschrieben.

### Ergebnis:

Alle beispielgemäßen Ausführungsformen lassen sich gut verarbeiten und zu den erfindungsgemäßen Bonbonwaren, insbesondere in Form von Hartkaramellen, verarbeiten. Die damit erhältlichen Bonbonwaren zeichnen sich durch eine kontinuierliche und stabile Freisetzung des Alkohols über die gesamte Verzehrzeit und auch noch nach längerer Lagerzeit aus.

## Patentansprüche

1. Bonbonware, die in Form einer Hartkaramelle, eines Bonbons, eines Lutschers, einer Weichkaramelle oder eines Kaubonbons ausgebildet ist, umfassend zumindest zwei Komponenten (a) und (b), worin
(a) eine alkoholfreie Komponente ist, enthaltend mindestens einen Zucker, Zuckeraustauschstoff, zuckerähnlichen Stoff oder Mischungen davon, und
(b) eine Komponente ist, enthaltend eine Mischung aus Ethanol oder einer alkoholischen Flüssigkeit in einer Trägermatrix,
die zusammen eine Bonbonware mit einem insgesamt massiven Bonbonwarenmaterial bilden, worin der Alkohol oder die alkoholischen Flüssigkeiten in der Komponente (b) in einer Trägermatrix gebunden vorliegt und im Wesentlichen homogen in dem gesamten festen Bonbonwarenmaterial verteilt vorliegt.

2. Bonbonware nach Anspruch 1, worin die Komponenten (a) und (b) in drei oder mehr einander abwechselnden Schichten vorliegen.

3. Bonbonware nach Anspruch 1 oder 2, worin die Bonbonware an ihren Außenseiten die Komponente (a) aufweist.

4. Bonbonware nach einem der vorhergehenden Ansprüche, die in Form eines Hohlkörpers ausgebildet ist, der eine Füllung (c) enthält, wobei die Füllung (c) bevorzugt eine flüssige oder fließfähige alkoholhaltige Füllung ist.

5. Bonbonware nach einem der vorhergehenden Ansprüche, worin die Trägermatrix der Komponente (b) ausgewählt ist aus einem festen oder pulverförmigen Zucker, Zuckeraustauschstoff oder zuckerähnlichen Stoff, einem festen oder pulverförmigen Verdickungsmittel aus der Gruppe der Cellulosen, wie mikrokristalline Cellulose, Methyl-, Ethyl-, Hydroxypropyl-, Hydroxypropylmethyl-, Methylethyl-, Carboxymethyl, Natriumcarboxymethylcellulose oder Celluloseether, oder einem Hydrokolloidgel.

6. Bonbonware nach einem der vorhergehenden Ansprüche, worin die Trägermatrix der Komponente (b) ausgewählt ist aus einem Zuckeraustauschstoff oder zuckerähnlichen Stoff, ausgewählt aus der Gruppe bestehend aus Sorbitol, Xylitol, Maltitol, Mannitol, Isomalt, Erythrit und Lactitol,

7. Bonbonware nach einem der vorhergehenden Ansprüche, worin die Komponenten (a) und/oder (b) einen oder mehrere Zusatzstoffe aus der Gruppe bestehend aus Verdickungsmitteln, Aromastoffen, Farbstoffen, Süßstoffen, Säuerungsmitteln, Milchprodukten, färbenden Lebensmitteln und Mischungen davon enthalten.

8. Bonbonware nach einem der vorhergehenden Ansprüche, **dadurch gekennzeichnet, dass** der Anteil des mindestens einen Zuckers, Zuckeraustauschstoffs, zuckerähnlichen Stoffs oder der Mischung davon in der alkoholfreien Komponente (a) 65 bis 100 Gew.-%, bezogen auf die Komponente (a), beträgt.

9. Bonbonware nach einem der vorhergehenden Ansprüche, **dadurch gekennzeichnet, dass** der Anteil des Ethanols oder der alkoholischen Flüssigkeit in der Komponente (b) 10 bis 95 Gew.-%, bezogen auf die Komponente (b), beträgt,

10. Verfahren zur Herstellung einer Bonbonware gemäß einem der Ansprüche 1 bis 9, welches die folgenden Verfahrensschritte umfasst:
(1) Herstellung einer viskosen, modellierbaren, zähplastischen, streich- oder fließfähigen Masse der alkoholfreien Komponente (a) durch Erwärmen einer Mischung oder Schmelze der gewünschten Bestandteile der Komponente (a);
(2) Herstellung der Komponente (b) durch Bereitstellen des Materials der Trägermatrix, gegebenenfalls Einmischen weiterer Zusatzstoffe, Einrühren des Ethanols oder der alkoholischen Flüssigkeit in das Material der Trägermatrix unter Erhalt einer im Wesentlichen homogenen viskosen, modellierbaren, zähplastischen, fließ- oder streichfähigen Mischung;
(3) Einbetten oder Einschließen der Komponente (b) aus Schritt (2) in der viskosen, modellierbaren, zähplastischen, streich- oder fließfähigen Masse der alkoholfreien Komponente (a) aus Schritt (1) unter Ausbildung eines Bonbonwarenmaterials, in dem die Komponenten (a) und (b) jeweils eine Grenzfläche zueinander aufweisen können und worin der Alkohol in dem gesamten Bonbonwarenmaterial im Wesentlichen homogen verteilt vorliegt;
(4) Formgebung des aus Schritt (3) erhaltenen Bonbonwarenmaterials unter Erhalt eines Formkörpers, der gegebenenfalls in Form eines Hohlkörpers mit mindestens einer Öffnung ausgebildet sein kann;
(5) gegebenenfalls Bereitstellung einer Füllmasse (c);
(6) gegebenenfalls Verfüllen der Füllmasse (c) aus Schritt (5) in den Formkörper in Form eines Hohlkörpers mit mindestens einer Öffnung aus Schritt (4) und Verschließen der mindestens einen Öffnung des Formkörpers;
(7) gegebenenfalls Einbringen eines Stiels in den Formkörper aus Schritt (4) oder (6)
(8) Abkühlen des Formkörpers unter Erhalt der Bonbonware,

11. Verfahren nach Anspruch 10, worin die Masse der alkoholfreien Komponente (a) aus Schritt (1) eine Schmelze mindestens eines Zuckers, Zuckeraustauschstoffs, zuckerähnlichen Stoffs oder einer Mischung davon ist,

12. Verfahren nach Anspruch 10 oder 11, worin in Schritt (2) die Herstellung der Komponente (b) durch Einmischen des Ethanols oder der alkoholischen Flüssigkeit in ein festes oder pulverförmiges Material der Trägermatrix, welches ausgewählt ist aus der Gruppe umfassend feste oder pulverförmige Zucker, Zuckeraustauschstoffe oder zuckerähnliche Stoffe, feste oder pulverförmige Verdickungsmittel aus der Gruppe der Cellulosen, insbesondere Hydroxypropylcellulose, erfolgt.

13. Verfahren nach Anspruch 10 oder 11, worin in Schritt (3) das Einbetten der Komponente (b) erfolgt durch Aufbringen der Komponente (b) auf einer Schicht der fließfähigen Masse der alkoholfreien Komponente (a) und Aufbringen mindestens einer weiteren Schicht der fließfähigen Masse der alkoholfreien Komponente (a) auf der Schicht der Komponente (b), gegebenenfalls Aufbringen weiterer Schichten der Komponenten (b) und (a), wobei die äußersten Schichten des so gebildeten drei- oder mehrschichtigen Bonbonwarenmaterials aus der alkoholfreien Komponente (a) gebildet werden.

14. Verfahren nach Anspruch 10 oder 11, worin in Schritt (3) das Einbetten der Komponente (b) erfolgt durch Aufbringen der Komponente (b) auf einer Schicht der fließfähigen Masse der alkoholfreien Komponente (a) und Einrollen oder Verdrillen und Verkneten des so gebildeten mehrschichtigen Bonbonwarenmaterials, wobei die äußerste Schicht der so gebildeten mehrschichtigen Rolle oder des verdrillten Strangs aus der alkoholfreien Komponente (a) gebildet ist,

15. Verfahren nach Anspruch 10 oder 11, worin in Schritt (3) das Einbetten der Komponente (b) erfolgt durch Aufbringen der Komponente (b) auf einer Schicht der fließfähigen Masse der alkoholfreien Komponente (a) und Falten des so gebildeten schichtförmigen Bonbonwarenmaterials, derart dass ein mehrschichtiges Bonbonwarenmaterial gebildet wird, wobei die äußerste Schicht des so gebildeten Bonbonwarenmaterials aus der alkoholfreien Komponente (a) gebildet wird.

## Claims

1. Candy product, which is in the form of a hard candy, a drop, a lollipop, a soft candy or a chewy candy, comprising at least two components (a) and (b), wherein
(a) is an alcohol-free component containing at least one sugar, sugar substitute, sugar-like substance or mixtures thereof, and
(b) is a component containing a mixture of ethanol or an alcoholic liquid in a carrier matrix,
which together form an overall solid candy material, wherein the alcohol or alcoholic liquids are present in the component (b) bound to the carrier matrix and are substantially homogeneously distributed throughout the solid candy material.

2. The candy product of claim 1, wherein the components (a) and (b) are present in three or more alternating layers.

3. The candy product according to claim 1 or 2, wherein the candy product comprises the component (a) at the outer surfaces.

4. The candy product according to any of the preceding claims, which is in the form of a hollow body containing a filling (c), wherein the filling (c) is preferably a liquid or flowable alcoholic filling.

5. The candy product according to any one of the preceding claims wherein the carrier matrix of component (b) is selected from a solid or powdered sugar, sugar substitute or sugar-like substance, a solid or powdered thickener from the group of celluloses such as microcrystalline cellulose, methyl-, ethyl-, hydroxypropyl-, hydroxypropylmethyl-, methylethyl-, carboxymethyl-, sodium carboxymethylcellulose or cellulose ethers, or a hydrocolloid gel.

6. The candy product according any one of the preceding claims, wherein the carrier matrix of component (b) is selected from a sugar-substitute or sugar-like substance, selected from sorbitol, xylitol, maltitol, mannitol, isomalt, erythrit and lactitol.

7. The candy product according to any one of the preceding claims, wherein the components (a) and/or (b) comprise one or more additives selected from the group consisting of thickening agents, flavoring agents, colorants, sweeteners, acidifying agents, dairy products, coloring foods and mixtures thereof.

8. The candy product according to any of the preceding claims, **characterized in that** the amount of the at least one sugar, sugar substitute, sugar-like substance or the mixture thereof in the alcohol-free component (a) is 65 to 100% by weight, based on the component (a).

9. The candy product according to any of the preceding claims, **characterized in that** the amount of the ethanol or the alcoholic liquid in the component (b) is 10 to 95% by weight, based on the component (b).

10. A process for producing a candy product according to any of claims 1 to 9, which comprises the following process steps:
(1) preparation of a viscous, moldable, viscoplastic, spreadable or flowable mass of the alcohol-free component (a) by heating a mixture or melt of the desired constituents of component (a);
(2) preparation of component (b) by providing the material of the carrier matrix, optionally admixing further additives, stirring the ethanol or alcoholic liquid into the material of the carrier matrix to obtain a substantially homogeneous viscous, moldable, viscoplastic, flowable or spreadable mixture;
(3) embedding or enclosing component (b) of step (2) in the viscous, moldable, viscoplastic, spreadable or flowable mass of the alcohol-free component (a) of step (1) to form a candy material in which the components (a) and (b) each may have an interface to each other and wherein the alcohol is substantially homogeneously distributed throughout the whole candy material;
(4) shaping the candy material obtained from step (3) to obtain a molded article, which may optionally be in the form of a hollow body having at least one opening;
(5) optionally providing a filling material (c);
(6) optionally filling the filling material (c) from step (5) into the molded article in the form of a hollow body with at least one opening of step (4) and closing the at least one opening of the molded article;
(7) optionally inserting a stick into the molded article of step (4) or (6)
(8) cooling the molded article to obtain the candy product.

11. The process according to claim 10, wherein the mass of the alcohol-free component (a) of step (1) is a melt of at least one sugar, sugar substitute, sugar-like substance or a mixture thereof.

12. The process according to claim 10 or 11, wherein in step (2) the preparation of component (b) takes place by mixing the ethanol or alcoholic liquid into a solid or powdered material of the carrier matrix which is selected from the group consisting of solid or powdered sugars, sugar substitutes or sugar-like substances, solid or powdered thickening agents from the group of celluloses, in particular hydroxypropylcellulose.

13. The process according to claim 10 or 11, wherein in step (3) the embedding of the component (b) is carried out by applying the component (b) on a layer of the flowable mass of the alcohol-free component (a) and applying at least one further layer of the flowable mass of the alcohol-free component (a) on the layer of component (b), optionally applying further layers of components (b) and (a), whereby the outermost layers of the thus formed three- or multi-layered candy material are formed from the alcohol-free component (a).

14. The process according to claim 10 or 11, wherein in step (3) the embedding of the component (b) is carried out by applying the component (b) to a layer of the flowable mass of the alcohol-free component (a) and rolling or twisting and kneading the thus formed multilayer candy material, wherein the outermost layer of the multilayered roll or the twisted strand thus formed is formed of the alcohol-free component (a).

15. The process according to claim 10 or 11, wherein in step (3) embedding of the component (b) is carried out by applying component (b) to a layer of the flowable mass of the alcohol-free component (a) and folding the layered candy material thus formed, such that a multi-layered candy material is formed, wherein the outermost layer of the candy material thus formed is formed of the alcohol-free component (a).

## Revendications

1. Produit de confiserie, qui se présente sous la forme d'un bonbon dur, d'une goutte, d'une sucette, d'un bonbon mou ou d'un bonbon à mâcher, comprenant au moins deux composants (a) et (b), dans lesquels
(a) est un composant sans alcool contenant au moins un sucre, un substitut de sucre, une substance analogue au sucre ou des mélanges de ceux-ci, et
(b) est un composant contenant un mélange d'éthanol ou d'un liquide alcoolique dans une matrice de support,
qui forment ensemble une matière de bonbon solide globale, dans laquelle l'alcool ou les liquides alcooliques sont présents dans le composant (b) lié à la matrice de support et sont distribués de manière sensiblement homogène dans toute la matière de bonbon solide.

2. Produit de confiserie selon la revendication 1, dans lequel les composants (a) et (b) sont présents en trois ou plus couches alternées.

3. Produit de confiserie selon la revendication 1 ou 2, dans lequel le produit de confiserie comprend le composant (a) sur leurs surfaces extérieures.

4. Produit de confiserie selon l'une quelconque des revendications précédentes, qui se présente sous la forme d'un corps creux contenant un remplissage (c), dans lequel le remplissage (c) est de préférence un remplissage alcoolique liquide ou fluide.

5. Produit de confiserie selon l'une quelconque des revendications précédentes, dans lequel la matrice de support du composant (b) est choisie parmi un sucre solide ou en poudre, un substitut de sucre ou une substance analogue au sucre, un épaississant solide ou en poudre du groupe des celluloses telles que la cellulose microcristalline, la méthyl-, l'éthyl-, l'hydroxypropyl-, l'hydroxypropylméthyl-, le méthyléthyl-, la carboxyméthyl-, la carboxyméthylcellulose sodique ou les éthers de cellulose, ou un gel hydrocolloïde.

6. Produit de confiserie selon l'une quelconque des revendications précédentes, dans lequel la matrice de support du composant (b) est choisie parmi un substitut de sucre ou une substance de type sucre, choisie parmi le sorbitol, le xylitol, le maltitol, le mannitol, l'isomalt, l'érythrite et le lactitol.

7. Produit de confiserie selon l'une quelconque des revendications précédentes, dans lequel les composants (a) et/ou (b) comprennent un ou plusieurs additifs choisis dans le groupe constitué par les agents épaississants, les agents aromatisants, les colorants, les édulcorants, les agents acidifiants, les produits laitiers, les aliments colorants et leurs mélanges.

8. Produit de confiserie selon l'une quelconque des revendications précédentes, **caractérisé en ce que** la quantité d'au moins un sucre, d'un substitut de sucre, d'une substance analogue au sucre ou de leur mélange dans le composant sans alcool (a) est de 65 à 100% en poids, par rapport au composant (a).

9. Le produit de confiserie selon l'une quelconque des revendications précédentes, **caractérisé en ce que** la quantité d'éthanol ou de liquide alcoolique dans le composant (b) est de 10 à 95% en poids, par rapport au composant (b).

10. Procédé de production d'un produit de confiserie selon l'une quelconque des revendications 1 à 9, qui comprend les étapes de procédé suivantes:
(1) préparation d'une masse visqueuse, moulable, viscoplastique, étalable ou fluide du composant sans alcool (a) par chauffage d'un mélange ou d'une masse fondue des constituants souhaités du composant (a);
(2) préparation du composant (b) en fournissant le matériau de la matrice de support, en mélangeant éventuellement d'autres additifs, en remuant l'éthanol ou le liquide alcoolique dans le matériau de la matrice de support pour obtenir un mélange visqueux, moulable, viscoplastique, fluide ou étalable sensiblement homogène;
(3) l'incorporation ou l'enfermement du composant (b) de l'étape (2) dans la masse visqueuse, moulable, viscoplastique, étalable ou fluide du composant sans alcool (a) de l'étape (1) pour former une matière de bonbon dans laquelle les composants (a) et (b) peuvent chacun avoir une interface l'un avec l'autre et dans laquelle l'alcool est distribué de manière sensiblement homogène dans toute la matière de bonbon;
(4) façonner le matériau de bonbon obtenu à l'étape (3) pour obtenir un article moulé, qui peut éventuellement se présenter sous la forme d'un corps creux ayant au moins une ouverture;
(5) en prévoyant éventuellement un matériau de remplissage (c);
(6) facultativement, remplir le matériau de remplissage (c) de l'étape (5) dans l'article moulé sous la forme d'un corps creux avec au moins une ouverture de l'étape (4) et fermer la au moins une ouverture de l'article moulé;
(7) éventuellement insérer un bâton dans l'article moulé de l'étape (4) ou (6)
(8) refroidir l'article moulé pour obtenir le produit de confiserie.

11. Procédé selon la revendication 10, dans lequel la masse du composant sans alcool (a) de l'étape (1) est une masse fondue d'au moins un sucre, un substitut de sucre, une substance analogue au sucre ou un mélange de ceux-ci.

12. Procédé selon la revendication 10 ou 11, dans lequel, dans l'étape (2), la préparation du composant (b) a lieu en mélangeant l'éthanol ou le liquide alcoolique dans un matériau solide ou en poudre de la matrice de support qui est choisi dans le groupe constitué par les sucres solides ou en poudre, les substituts de sucre ou les substances semblables au sucre, les agents épaississants solides ou en poudre du groupe des celluloses, en particulier l'hydroxypropylcellulose.

13. Procédé selon la revendication 10 ou 11, dans lequel, à l'étape (3), l'incorporation du composant (b) est effectuée en appliquant le composant (b) sur une couche de la masse fluide du composant sans alcool (a) et en appliquant au moins une autre couche de la masse fluide du composant sans alcool (a) sur la couche de composant (b), en appliquant éventuellement d'autres couches de composants (b) et (a), dans lequel les couches les plus extérieures du matériau de bonbon à trois ou plusieurs couches ainsi formé sont formées à partir du composant sans alcool (a).

14. Procédé selon la revendication 10 ou 11, dans lequel, à l'étape (3), l'incorporation du composant (b) est effectuée en appliquant le composant (b) à une couche de la masse fluide du composant sans alcool (a) et en roulant ou en tordant et en pétrissant le matériau de bonbon multicouche ainsi formé, dans lequel la couche la plus extérieure du rouleau multicouche ou le brin torsadé ainsi formé est formé du composant sans alcool (a).

15. Procédé selon la revendication 10 ou 11, dans lequel, à l'étape (3), l'incorporation du composant (b) est effectuée en appliquant le composant (b) à une couche de la masse fluide du composant sans alcool (a) et en pliant le matériau de bonbon en couches ainsi formé, de sorte qu'un matériau de bonbon multicouche est formé, dans lequel la couche la plus extérieure du matériau de bonbon ainsi formé est formée du composant sans alcool (a).
